# FASCICULE DE BREVET EUROPEEN

(11) **EP 0 433 202 B1**
(45) Date de publication et mention de la délivrance du brevet: **08.03.1995**
(21) Numéro de dépôt: 90470066.3
(22) Date de dépôt: 03.12.1990
(51) Int. Cl.: F16L 37/08

(54) **Garniture d'étanchéité composite pour assemblage verrouillé de tuyaux à bout mâle et emboîtement**
Abdichtanordnung aus einen Verbundwerkstoff für eine verriegelbare Muffenrohrverbindung
Composite seal assembly for locked plug and socket pipe fittings

(30) Priorité: 11.12.1989 FR 8916524
(43) Date de publication de la demande: 19.06.1991
(73) Titulaire: PONT-A-MOUSSON S.A., 54017 Nancy (FR)
(72) Inventeur: Demoisson, Jacques, F-54700 Loisy (FR); Hussard, Michel, F-54700 Pont-à-Mousson (FR); Percebois, Alain, F-54700 Blenod les Pont-à-Mousson (FR)
(74) Mandataire: Puit, Thierry

(56) Documents cités:
- EP-A- 406 145
- EP-A- 0 310 534
- FR-A- 1 490 680
- GB-A- 1 550 624
- GB-A- 2 018 924
- US-A- 3 272 538

## Description

La présente invention est relative à une garniture d'étanchéité composite pour assemblage verrouillé de tuyaux à bout mâle et à emboîtement, coaxiaux, l'assemblage étant télescopique.

Plus particulièrement, elle concerne une garniture d'étanchéité composite dans le corps élastique de laquelle sont noyés un certain nombre d'inserts de verrouillage du bout mâle d'un tuyau par rapport à l'emboîtement d'un autre tuyau, la garniture étant comprimée radialement entre le bout mâle et l'emboîtement.

Dans l'assemblage, chaque insert de verrouillage, en matériau dur, s'arc-boute suivant une certaine inclinaison entre l'emboîtement d'un premier tuyau et le bout mâle d'un second tuyau.

Un tel verrouillage empêche les mouvements axiaux d'un tuyau par rapport à l'autre qui pourraient compromettre la bonne étanchéité du joint et même disjoindre complètement les tuyaux initialement assemblés, sous l'action des forces axiales de séparation engendrées par la pression du fluide contenu dans les tuyaux.

Ce verrouillage remplace avantageusement un système coûteux de fixation d'une canalisation sur des fondations ancrées dans le sol.

Par le brevet FR 1 490 680, on connaît une garniture d'étanchéité composite pourvue d'inserts de verrouillage ainsi qu'un assemblage verrouillé télescopique du type précité. Suivant ce brevet, chaque insert, d'inclinaison fixe et faible par rapport à l'axe de la garniture ou d'inclinaison variable entre d'étroites limites permises par un orifice qui traverse l'emboîtement, s'accroche sur une gorge circulaire creusée sur le bout mâle d'un tuyau. Suivant un mode d'exécution, chaque insert est réalisé sous forme d'un doigt vissable dans un écrou noyé dans la garniture d'étanchéité en vue de modifier la longueur utile du doigt de verrouillage pour le cas où des tuyaux de grand diamètre ne sont pas rigoureusement alignés.

En raison de la faible inclinaison des inserts de verrouillage nécessitant l'appui sur le bout mâle par une gorge circulaire, et en raison des étroites limites de débattement angulaire desdits inserts, les tolérances diamétrales des bouts mâles des tuyaux ainsi verrouillables sont également étroites.

La Demanderesse s'est posé le problème d'assurer un arc-boutement de chaque insert sur le bout mâle, sans creuser de gorge sur le bout mâle, sans faire varier la longueur de l'insert, tout en assurant un verrouillage efficace avec des tolérances diamétrales du bout mâle les plus larges possible.

Ce problème est résolu par la garniture d'étanchéité composite de l'invention.

L'invention a donc pour objet un assemblage télescopique, verrouillé et étanche entre deux tuyaux ayant les caractéristiques de la revendication 1.

Grâce à ses possibilités de débattement angulaire par rapport à la garniture dans laquelle il est noyé, chaque insert peut s'adapter à des variations de diamètre du bout mâle ou de l'emboîtement d'un tuyau, aussi appelées tolérances diamétrales, c'est-à-dire à un jeu annulaire variable entre bout mâle et emboîtement, pour l'inclinaison d'arc-boutement optimale. Ainsi, il suffit d'une seule longueur optimale d'insert dépendant des tolérances diamétrales rencontrées pour obtenir un bon verrouillage du bout mâle d'un tuyau par rapport à l'emboîtement de l'autre tuyau.

Ainsi, pour un faible jeu annulaire entre les tuyaux assemblés, l'insert se comporte comme si il avait une faible longueur, et, pour un jeu annulaire important, l'insert se comporte comme si il avait une grande longueur. Ceci est obtenu par une inclinaison optimale de l'insert qui tourne autour d'un premier pivot théorique de rotation par rapport à l'emboîtement pour une première gamme de tolérances et autour d'un second pivot théorique de rotation pour une seconde gamme de tolérances.

D'autres caractéristiques et avantages apparaîtront au cours de la description qui va suivre faite en références aux dessins annexés donnés uniquement à titre d'exemples non limitatifs et parmi lesquels :
- la Fig. 1 est une section méridienne partielle de la garniture d'étanchéité composite de l'invention,
- la Fig. 2 est une vue partielle de la garniture suivant la ligne 2-2 de la Fig. 1,
- la Fig. 3 est une vue en élévation d'un insert seul, à plus grande échelle que les Fig. 1 et 2,
- les Fig. 4A et 4B sont des vues en coupe méridienne, à plus petite échelle que les Fig. 1 et 2 de deux tuyaux et de la garniture d'étanchéité composite interposée entre eux, respectivement avant et après réalisation de l'assemblage verrouillé de l'invention,
- les Fig. 5, 6 et 7 sont des vues partielles, en section méridienne, à grande échelle, illustrant différentes positions de l'insert pour différents jeux annulaires entre emboîtement et bout mâle de deux tuyaux,
- la Fig. 8 est une épure géométrique à grande échelle illustrant différentes inclinaisons de la réaction du bout mâle sur l'insert, pour différents jeux annulaires ainsi que les courbes d'évolution des points de contact de l'insert avec des bouts mâles de différents diamètres, et des tangentes des angles de réaction pour chaque inclinaison de l'insert,

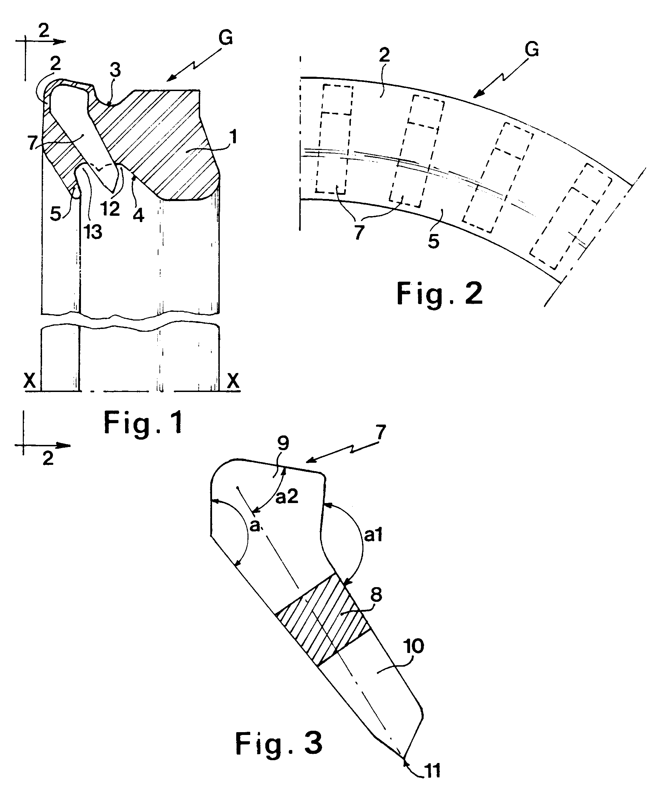

Suivant l'exemple d'exécution de la Fig. 1 l'invention est appliquée à une garniture d'étanchéité G d'axe X-X. Sa section méridienne comporte un corps massif annulaire 1 en élastomère et un talon annulaire 2 également en élastomère. Le corps 1 et le talon 2 sont séparés par une gorge circulaire périphérique 3 et par une gorge circulaire interne 4. La gorge interne 4 est limitée du côté du talon 2, par une lèvre circulaire interne 5 oblique par rapport à l'axe X-X. Mince et souple, la lèvre 5 en élastomère converge vers l'axe X-X jusqu'au voisinage du diamètre interne minimum du corps massif 1.

La garniture G comporte un certain nombre d'inserts 7 en matériau filé ou fritté de grande dureté, par exemple en alliage métallique dur ou en céramique. Les inserts 7 sont régulièrement répartis sur tout le pourtour de la garniture G. Chaque insert 7 est un corps de section transversale rectangulaire 8, de profil coudé, composée d'une tête large 9 à peu près rectangulaire et d'un corps allongé 10 formant deux angles obtus a et a1 de déviation par rapport à ladite tête 9. Chaque tête 9 et une grande partie de chaque corps 10 sont noyées dans le talon annulaire 2 de la garniture G et recouvertes par la matière élastique du talon 2. Le bec 11 et une partie du corps 10 sont en saillie vers l'axe X-X de la garniture G par rapport à la gorge circulaire interne 4 de ladite garniture G.

La gorge interne 4 comporte un flanc oblique adjacent au corps massif 1 et un flanc oblique constituée par la lèvre oblique 5. Entre un insert 7 et chacun de ces flancs obliques sont ménagés deux espaces annulaires 12 et 13.

La garniture composite G, à inserts, est destinée à être montée entre deux tuyaux T1 et T2, par exemple en fonte à graphite sphéroïdal. L'un des tuyaux, T1, à emboîtement 15, comporte successivement en allant axialement du fond vers l'entrée dudit emboîtement 15, une chambre annulaire 16 pour le débattement du bout mâle de l'autre tuyau, une butée circulaire 17 en saillie interne par rapport à la chambre 16, une chambre circulaire 18 de logement d'un talon 2 d'une garniture G et un collet d'entrée 19, circulaire et limitant la gorge 18 de diamètre interne sensiblement inférieur à celui de la butée 17. Le collet d'entrée 19 est relié à la gorge 18 par une surface arrondie 14.

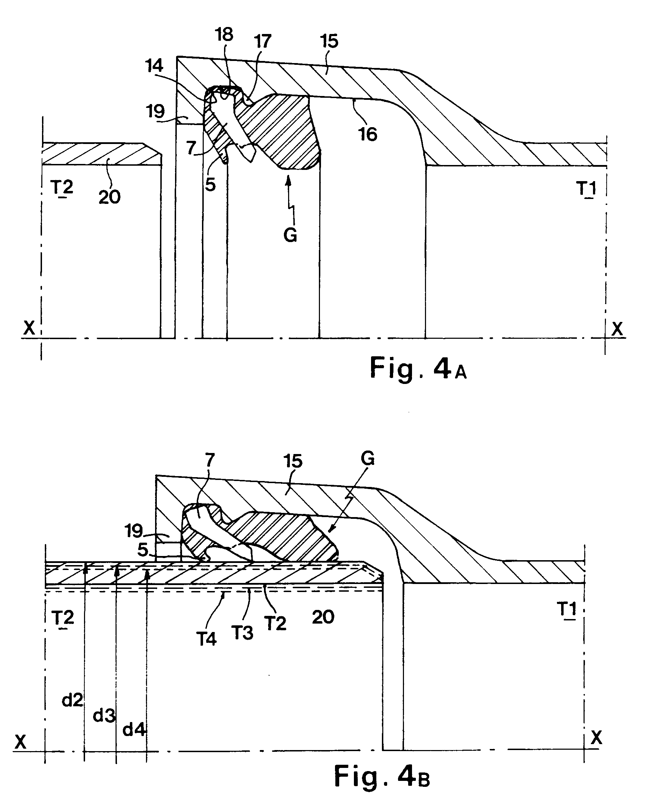

L'autre tuyau, T2, à bout mâle cylindrique 20 est fabriqué avec des tolérances diamétrales correspondant à un diamètre extérieur maximal d2, un diamètre extérieur moyen d3 et un diamètre extérieur minimal d4. Les tuyaux de diamètres extérieurs d3 et d4 sont désignés respectivement par T3 et T4 sur la Fig. 4B.

En vue de leur assemblage, les tuyaux T1 et T2 sont rapprochés et alignés suivant leur axe X-X (Fig. 4A). La garniture G est introduite dans l'emboîtement 15 du tuyau T1, le corps 1 prenant place dans la chambre 16 et le talon 2 s'ajustant dans la gorge de logement 18, l'axe X de la garniture G étant confondue avec celui des tuyaux T1 et T2.

Puis, le bout mâle 20 du tuyau T2 est introduit à travers la garniture G en écartant d'abord la lèvre 5 qui s'applique avec une certaine pression sur la surface externe du bout mâle 20. Lorsque le bout mâle 20 franchit le seuil des inserts 7, ceux-ci s'inclinent par débattement angulaire dans l'espace 12 à l'encontre du corps 1. L'introduction du bout mâle 1 est poursuivie jusqu'à ce que sa tranche d'extrémité arrive à proximité du fond de la chambre 16. Puis, le bout mâle 20 est ramené axialement en arrière de manière à provoquer le rebroussement des inserts 7. Les inserts 7 modifient leur inclinaison sur l'axe X-X par un débattement angulaire inverse du précédent et de faible amplitude dans l'espace 13, à l'encontre de la lèvre circulaire 5. Lors de ce rebroussement, les bec 11 des inserts 7 s'accrochent sur la surface externe du bout mâle 20 et offrent alors une sensible résistance à la continuation du mouvement axial de retrait du bout mâle 20. Le verrouillage de l'assemblage télescopique des tuyaux T1 et T2 est réalisé.

Il va maintenant être décrit le fonctionnement du dispositif selon l'invention en fonction des tolérances diamétrales.

Après les débattements angulaires précités lors de l'assemblage des tuyaux T1 et T2, chaque insert 7 prend des appuis et inclinaisons différents selon le diamètre d2, d3 ou d4, en position de verrouillage.

Dans le cas d'un diamètre minimal d4, qui constitue un jeu annulaire maximal j4 entre le bout mâle 20 et la gorge 18 de l'emboîtement, le bec 11 est en contact avec le bout mâle 20 en un point K. La tête 9 est en appui sur le gorge 18 en un seul point C. La médiane d'inclinaison de l'insert 7 qui sert de support à une force de réaction F de l'insert 7 contre le bout mâle 20 passe alors par un pivot théorique de rotation R2 . C'est dans ce cas que l'inclinaison de l'insert 7 par rapport à l'axe X-X est la plus forte, le verrouillage est encore bon.

Dans le cas d'un diamètre maximal d2, qui constitue un jeu annulaire minimal j2 entre le bout mâle 20 et la gorge 18 de l'emboîtement, le bec 11 est en contact avec le bout mâle 20 en un point D d'accrochage, la tête 9 étant en appui sur la gorge 18 en deux points A et B.

L'intersection des normales aux deux points de contact A et B détermine un nouveau pivot théorique R1, plus éloigné de la face 19 que le pivot R2, et dont le segment de droite qui le joint au point D sert de support à la force de réaction F. C'est dans ce cas que l'inclinaison de l'insert 7 par rapport à l'axe X-X est la plus faible tout en assurant un bon verrouillage du bout mâle.

Entre ces deux extrèmes existe un diamètre caractéristique moyen d3, qui constitue un jeu annulaire moyen j3 entre le bout mâle 20 et la gorge 18 de l'emboîtement, le bec 11 étant en contact avec le bout mâle 20 en un point H d'accrochage et la tête 9 appuyant à la fois sur la surface arrondie 14 prolongeant le collet d'entrée 19 et la gorge 18 . Dans ce cas l'inclinaison de l'insert 7 est intermédiaire entre celles des deux cas précédents.

Ce point de transfert est déterminé par la valeur d un angle a2 entre une ligne joignant le pivot R1 et l'extrémité du bec 11 et une face supérieure de la tête 9 en regard de la gorge 18 de l'emboîtement.

D'après ces trois cas, il apparaît que pour obtenir un verrouillage optimal, l'angle de réaction x, qui est celui de la force de réaction F précitée avec la normale à la génératrice du bout mâle 20 au point de contact D, H ou K, doit être compris entre certaines limites qui sont fonction de la force de verrouillage désirée, du matériau des tuyaux T1 et T2 et de l'état de surface de ces tuyaux.

Pour qu'il y ait verrouillage du bout mâle 20 du tuyau T2 par rapport à l'emboîtement 15 du tuyau T1, il faut que l'insert 7, qui s'appuie par sa tête 9 sur la gorge 18 de l'emboîtement, exerce une force de réaction F à l'encontre du bout mâle 20 . La force F est dirigée suivant un segment de droite qui joint le point d'accrochage du bec 11 sur le bout mâle 20 au pivot théorique de rotation R1 ou R2.

La force de réaction F fait un angle x avec la normale à la génératrice du bout mâle 20 au point de contact D, H ou K.

Si l'angle de réaction x est élevé, la composante parallèle à l'axe X-X de la force F est prépondérante par rapport à sa composante perpendiculaire à l'axe X-X ce qui favorise théoriquement un bon verrouillage. Malgré tout, pour permettre un accrochage effectif du bec 11 contre la surface externe du bout mâle 20 il convient que l'angle x de la réaction F ne dépasse pas une certaine limite maximale au delà de laquelle l'insert 7 n'accroche plus la surface externe du bout mâle 20 et se contente de glisser contre elle.

Inversement, si l'angle de réaction x est faible, la composante horizontale de la force F de réaction devient négligeable par rapport à sa composante perpendiculaire à l'axe du bout mâle, ainsi, si dans ce cas le bec 11 pénêtre effectivement la surface du bout mâle 20, la force F ne peut s'opposer efficacement à une poussée du tuyau T2 par rapport au tuyau T1 selon l'axe X-X et ne peut donc s'opposer a un mouvement de recul.

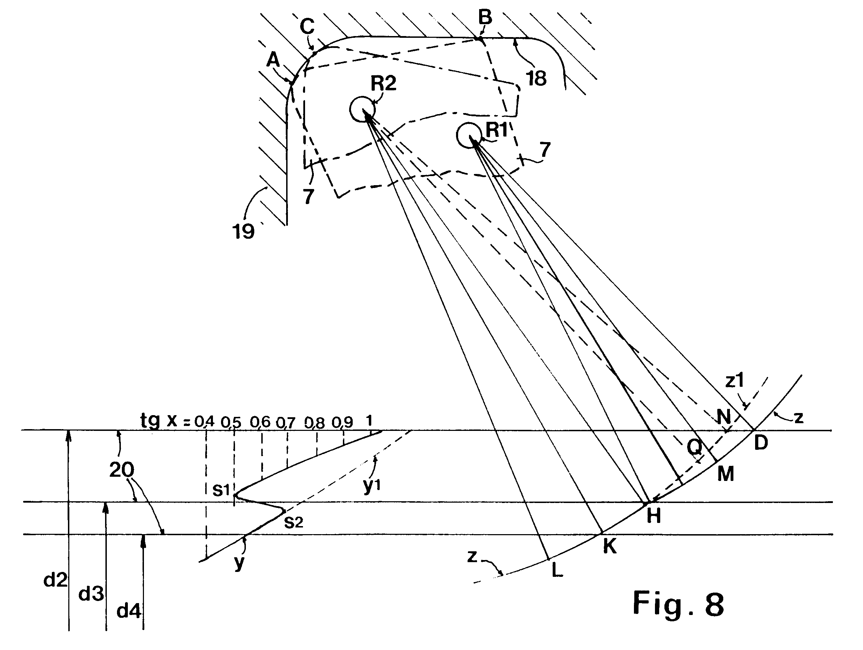

Sur la Fig. 8, d'autres points de contact des bec 11 avec la surface externe des bouts mâles 20 sont marqués en M et L pour des diamètres respectivement supérieur à d3 et inférieur à d4. Les pivots théoriques R1 (dans le cas de deux appuis A et B de la tête 9 sur la gorge 18) et R2 (dans le cas d'un seul appui C de la tête 9 sur la gorge 18) sont les zones où sont situés les centres de rotation d'un insert 7 au cours de débattement angulaire pendant le retrait de verrouillage du bout mâle 20. Des rayons de rotation joignant R1 ou R2 à différents points de contact d'un bec 11 avec un bout mâle 20, en D, H, K, M, L servent de support aux forces de réaction F sur l'insert 7.

Une courbe z est celle qui joint les différents points de contact D, H, K, M, L d'un bec 11 avec la surface externe d'un bout mâle 20 dont le diamètre varie suivant les tolérances de fabrication.

Une courbe y représente les variations de la tangente de l'angle x, tg x, en fonction de la tolérance diamétrale du bout mâle, c'est-à-dire du jeu annulaire j2, j3, j4. La courbe y présente deux changements brutaux de direction, ou rebroussements, en s1 et s2 situés au voisinage du diamètre d3. Il convient de noter à ce sujet que tg x ne doit pas être assimilé à un coefficient de frottement.

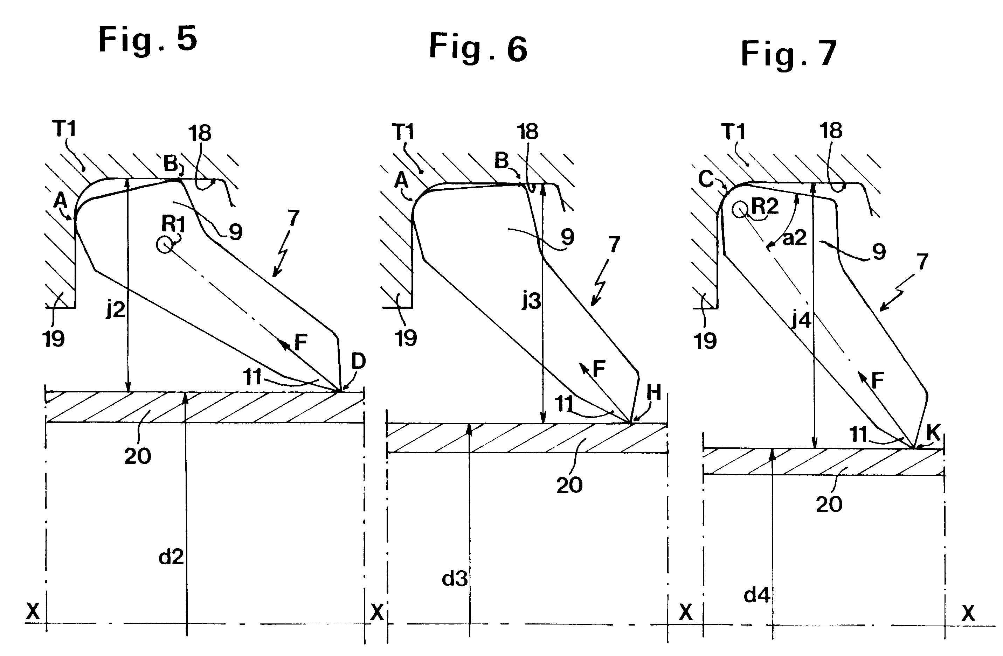

Ainsi, lorsque le jeu annulaire diminue, c'est-à-dire lorsque le diamètre du bout mâle augmente, tg x, donc x, augmente jusqu'au point s2. Ceci est encore vrai entre un diamètre passant par le point s1 et le diamètre d2 correspondant au jeu minimal j2. En revanche, entre les points s2 et s1 se produit un revirement de l'évolution de tg x qui diminue. Ce revirement correspond à une phase intermédiaire où l'insert 7 n'a plus un point de contact unique C contre la surface interne de l'emboîtement et n'a pas encore un point d'appui A contre le collet d'entrée 19 et un point d'appui B contre la gorge 18. Dans cette phase intermédiaire, l'insert 7 qui a déjà un point d'appui B contre la gorge 18 a encore un point d'appui A contre la surface arrondie 14. Dans ce cas, la normale au point de contact A n'est pas parallèle aux normales au collet d'entrée 19 ce qui déplace la position du pivot et donc l'angle x de la force de réaction. C'est le cas de la Fig. 6.

Sur la Fig. 8, une génératrice du bout mâle 20 a été graduée selon tg x de 0,4 à 1. En projetant chaque point de la courbe y sur la génératrice ainsi graduée on obtient la valeur de tg x, d'où l'on peut déduire la valeur de x, pour un diamètre du bout mâle 20 passant par le point considéré de la courbe y.

Par exemple, pour les points D, M, K la courbe y donne des valeurs de tg x respectivement supérieures à 1 (x = 46°) comprises entre 0,7 et 0,8 (x = 37°) et comprises entre 0,5 et 0,6 (x = 29°).

A titre comparatif, en trait interrompu, sont illustrés les rayons de rotation d'un insert de type connu suivant le brevet FR 1 490 680 et les points d'accrochage N, Q, H dudit insert sur des bouts mâles de différents diamètres.

Sur les rayons de rotation passant par un seul pivot R2, puisqu'il n'y a qu'un seul point de contact entre l'insert et l'emboîtement, sont marquées les forces de réaction V du bout mâle sur l'insert. Une courbe z1 joint les points de contact N, Q, H. De même une courbe y1 en trait interrompu illustre les valeurs de tg x de cette solution. Il apparaît ainsi que les possibilités de débattement angulaire d'un insert suivant le brevet FR 1 490 680 sont plus limitées que celles de l'insert 7 de l'invention, ainsi les tolérances diamétrales acceptables dans le cas d'un insert connu sont plus faibles que dans le cas de l'invention, cette amélioration venant du transfert du pivot R2 vers le pivot R1 au voisinage du diamètre d3. L'amélioration par rapport à l'art antérieur peut être résumée par l'apparition du point de contact B contre la gorge 18 de l'emboîtement ce qui a tendance à plaquer l'insert 7 sur le bout mâle en facilitant ainsi son accrochage malgré un faible jeu diamétral et donc une inclinaison de l'insert 7 faible par rapport à l'axe X-X.

Les inserts 7 renforcent la résistance au fluage de la garniture G et empêchent son expulsion vers l'extérieur de l'emboîtement 15 lorsque la canalisation contient un fluide sous forte pression. Les inserts 7 améliorent l'ancrage du talon 2 de la garniture G dans la gorge 18 d'emboîtement.

Grâce à l'angle a1, la face 9 de l'insert 7 est pratiquement perpendiculaire à l'axe X-X et parallèle à la face en vis à vis de la butée 17 de l'emboîtement.

Par leur inclinaison selon l'axe X-X à l'état libre (Fig. 1 et 4A) et par leur souplesse d'inclinaison ou de débattement angulaire, permise par la masse élastique non comprimée du corps 1 et par la lèvre souple 5, les inserts 7 offrent une faible résistance à la pénétration du bout mâle et rendent plus aisée l'introduction axiale du bout mâle 20 du tuyau T2 dans l'emboîtement 15 du tuyau T1 (Fig. 4A) et son léger retrait axial jusqu'à l'inclinaison optimale de verrouillage.

La zone d'ancrage des becs 11 des inserts 7 sur le bout mâle 20 est protégée contre les agressions des fluides extérieurs par la lèvre 5 de la garniture G (Fig. 4B) qui ferme complètement l'entrée de l'emboîtement 15.

Grâce à la variation des contacts d'appui de l'insert 7 sur la gorge 18 d'emboîtement (Fig. 5 à 7), c'est-à-dire grâce à la possibilité de passage d'un point C à deux points A et B d'appui, et grâce à l'évolution du pivot de rotation R1, R2 qui en résulte, en fonction du diamètre externe d2, d3, d4 du bout mâle 20 du tuyau T2 à verrouiller, l'angle x de réaction évolue autour d'une valeur optimale permettant un verrouillage efficace pour une grande plage de tolérances diamétrales du bout mâle 20 entre d2 et d4.

Grâce à la variation des appuis de la tête 9 sur la gorge 18 (Fig. 5 à 7) et à l'évolution du pivot théorique R1, R2 qui en résulte, l'insert 7 se comporte, pour de faibles jeux annulaires (j2) comme ayant une faible longueur et une forte inclinaison permettant un accrochage facile du bec 11, alors que pour des jeux annulaires importants (j4) l'insert 7 se comporte comme ayant une grande longueur et une faible inclinaison qui assure également un verrouillage efficace.

Enfin, les tolérances diamétrales, donc la gamme de diamètres (d2, d3, d4) de tuyaux T2 verrouillables est sensiblement élargie.

Si l'on veut encore élargir la gamme de diamètres de tuyaux verrouillables, donc les tolérances diamétrales, au lieu d'une seule série d'inserts 7, on utilise une deuxième série d'inserts de longueur différente de celle des inserts 7 et alternant avec ces derniers.

## Revendications

1. Assemblage télescopique, verrouillé et étanche entre un premier tuyau (T1) à emboîtement (15) et un second tuyau (T2) à bout mâle (20) pénétrant dans l'emboîtement (15) en comprimant radialement une garniture d'étanchéité composite (G,) montée entre les deux tuyaux (T1, T2), ladite garniture (G,) comportant :
- un corps massif (1) en matière élastique, comprimé radialement entre une chambre (16) du premier tuyau (T1) et le bout mâle (20) du second tuyau (T2) ;
- un talon annulaire (2) en matière élastique prenant appui sur une gorge annulaire (18) de logement à l'entrée de l'emboîtement ;
- et une pluralité d'inserts (7) en matériau de grande dureté qui sont noyés dans le talon (2) suivant les génératrices d'un cône ayant le même axe (XX) que la garniture (G,) en dehors de laquelle ils sont en protubérance, et qui présentent chacun une tête (9) logée dans le talon (2) et un bec d'accrochage (11) sur le bout mâle (20) du second tuyau (T2),
chaque insert (7) étant susceptible d'un débattement angulaire en s'appuyant sur le corps (1) de la garniture (G,) lors de la mise en place et du verrouillage du bout mâle (20), de manière telle que chaque insert (7) s'arc-boute par son bec (11) sur le bout mâle (20) et se trouve en appui par sa tête (9) sur la gorge (18) de l'emboîtement (15), cet appui s'effectuant en deux points (A, B) pour une première gamme de tolérances diamétrales (d2, d3) correspondant à des jeux annulaires faibles entre le bout mâle (20) et l'emboîtement (15), et en un seul point (C) de la gorge (18) pour une seconde gamme de tolérances diamétrales (d4) correspondant à des jeux annulaires plus importants.

2. Assemblage suivant la revendication 1, caractérisé en ce que chaque insert (7), constitué par une lamelle de section transversale rectangulaire (8), a un profil coudé.

3. Assemblage suivant la revendication 1 ou 2, caractérisé en ce que chaque insert (7) a une tête large (9) logée dans le talon annulaire (2) de la garniture (G,), un corps allongé (10) traversant ledit talon obliquement par rapport à l'axe (XX) de la garniture et formant un angle obtus (a, a1) de déviation ou de coude par rapport à la tête (9), et une extrémité en forme de bec (11) en protubérance hors de la garniture (G,) vers l'axe (XX) de celle-ci.

4. Assemblage suivant l'une quelconque des revendications 1 à 3, caractérisé en ce que l'extrémité ou tête (9) de chaque insert (7) noyée dans le talon annulaire (2) de la garniture (G,) est entièrement recouverte par la matière élastique de la garniture (G,).

5. Assemblage suivant l'une quelconque des revendications 1 à 4, caractérisé en ce que la garniture composite (G,) comporte en prolongement de son talon annulaire (2), radialement à l'opposé dudit talon (2), une lèvre annulaire oblique (5) convergeant vers l'axe (XX) de la garniture au moins jusqu'au diamètre interne minimum du corps massif (1) de la garniture (G,), ladite lèvre (5) ménageant avec le corps massif (1) une gorge annulaire interne (4) à l'intérieur de laquelle est en saillie ou protubérance chaque insert (7) par son bec (11) et une partie de son corps (10).

6. Assemblage suivant la revendication 5 caractérisé en ce que la lèvre annulaire oblique (5) et chaque insert (7) ont peu à peu la même inclinaison par rapport à l'axe (XX) de la garniture.

7. Assemblage suivant la revendication 5 caractérisé en ce que la gorge annulaire interne (4) comporte un flanc oblique, adjacent au corps massif (1) et un flanc oblique constitué par la lèvre oblique (5), un espace annulaire (12) étant ménagé entre chaque insert (7) et le flanc oblique adjacent au corps massif (1), cependant qu'un autre espace annulaire (13) est ménagé entre chaque insert (7) et le flanc constitué par la lèvre oblique (5).

## Claims

1. A locked and leaktight telescopic assembly between a first pipe (T1) with a socket (15) and a second pipe (T2) with a spigot (20) which penetrates the socket (15) radially compressing a composite sealing gasket (G) fitted between the two pipes (T1, T2), the said gasket (G) comprising:
- a solid body (1) of elastic material which is radially compressed between a chamber (16) in the first pipe (T1) and the spigot (20) of the second pipe (T2),
- an annular heel (2) of elastic material which bears against an annular receiving groove (18) at the entrance to the socket,
- and a plurality of inserts (7) of a material having great hardness which are embedded in the heel (2) along the generatrices of a cone having the same axis (XX) as the gasket (G), outside which they project, and each of which has a head (9) housed in the heel (2) and a catching nose (11) on the spigot (20) of the second pipe (T2),
each insert (7) being able to move angularly by bearing against the body (1) of the gasket (G) when the spigot (20) is inserted and locked in such a way that each insert (7) is buttressed by its nose (11) against the spigot (20) and bears by means of its head (9) against the groove (18) of the socket (15), this taking place at two points (A, B) for a first range of diametral tolerances (d2, d3) corresponding to small annular plays between the spigot (20) and the socket (50), and at a single point (C) on the groove (18) for a second range of diametral tolerances (d4) corresponding to larger annular plays.

2. An assembly according to claim 1, characterised in that each insert (7), comprising a lamella of rectangular transverse cross-section (8) having an angled profile.

3. An assembly according to claim 1 or 2, characterised in that each insert (7) has a broad head (9) seated in the annular heel (2) of the gasket (G), an elongate body (10) passing through the said heel obliquely with respect to the axis (XX) of the gasket and forming a deviation or elbow with an obtuse angle (a, a1) with respect to the head (9), and an end in the form of a nose (11) projecting beyond the gasket (G) towards the axis (XX) thereof.

4. An assembly according to any one of claims 1 to 3, characterised in that the end or head (9) of each insert (7) embedded in the annular heel (2) of the gasket (G) is entirely covered by the elastic material of the gasket (G).

5. An assembly according to any one of claims 1 to 4, characterised in that the composite gasket (G) comprises an oblique annular lip (5) as an extension to its annular heel (2), radially opposite the said heel (2), converging towards the axis (XX) of the gasket at least as far as the minimum internal diameter of the solid body (1) of the gasket (G), the said lip (5) forming with the solid body (1) an inner annular groove (4) within which each insert (7) protrudes or projects by means of its nose (11) and part of its body (10).

6. An assembly according to claim 5, characterised in that the oblique annular lip (5), and each insert (7) have approximately the same inclination with respect to the axis (XX) of the gasket.

7. An assembly according to claim 5, characterised in that the inner annular groove (4) comprises an oblique flank adjacent to the solid body (1) and an oblique flank consisting of the oblique lip (5), an annular space (12) being formed between each insert (7) and the oblique flank adjacent to the solid body (1), while another annular space (13) is formed between each insert (7) and the flank consisting of the oblique lip (5). nation.

## Patentansprüche

1. Teleskopische Anordnung, die verriegelt und dicht ist, zwischen einem ersten Rohr (T1) mit einer Aufnahme (15) und einem zweiten Rohr (T2) mit einem männlichen Endstück (20), das in die Aufnahme (15) eindringt unter radialer Komprimierung einer Dichtungsgarnitur oder -anordnung aus einem Verbundwerkstoff (G), die zwischen den beiden Rohren (T1, T2) angeordnet ist, wobei die Garnitur (G) aufweist:
- einen massiven Körper (1) aus elastischem Material, der radial zwischen einer Kammer (16) des ersten Rohres (T1) und dem männlichen Endstück (20) des zweiten Rohres (T2) komprimiert ist;
- einem ringförmigen Ansatz (2) aus elastischem Material, der in Anlage kommt gegen eine ringförmige Aufnahmekerbe (18) am Eingang der Aufnahme;
- und einer Mehrzahl von Einsätzen (7) aus Material von großer Härte, die in den Ansatz (2) gemäß den Erzeugenden eines Konus eingebracht sind, der dieselbe Achse (XX) wie die Garnitur (G) aufweist, außerhalb der sie vorspringen, und die jeweils einen Kopf (9), der in dem Ansatz (2) aufgenommen ist, und einen Anhäng- oder Verankerungsschnabel (11) an dem männlichen Endstück (20) des zweiten Rohres (T2) aufweisen,
wobei jeder Einsatz (7) in der Lage ist, eine winkelmäßige Verschiebung oder Federung unter Andruck an den Körper (1) der Garnitur (G) beim Vor-Ort-Setzen und dem Verriegeln des männlichen Endstücks (20) vorzunehmen, derart, daß jeder Einsatz (7) sich durch seinen Schnabel (11) an dem männlichen Endstück (20) verstrebt und in Anlage ist mit seinem Kopf (9) an der Kerbe (18) der Aufnahme (15), wobei diese Anlage in zwei Punkten (A, B) für einen ersten Bereich von Durchmessertoleranzen (d2, d3) erfolgt, die schwachen ringförmigen Spielen zwischen dem männlichen Endstück (20) und der Aufnahme (15) entsprechen, und in einem einzigen Punkt (C) der Aufnahme (18) für einen zweiten Durchmesser-Toleranzbereich (d4) erfolgt, der größeren ringförmigen Spielen entspricht.

2. Dichtungsanordnung nach Anspruch 1, dadurch gekennzeichnet, daß ein jeder Einsatz (7), der durch eine Lamelle mit rechtwinkligem Querschnitt (8) gebildet wird, ein geknicktes Profil aufweist.

3. Dichtungsanordnung nach Anspruch 1 oder 2, dadurch gekennzeichnet, daß ein jeder Einsatz (7) einen breiten Kopf (9) aufweist, der in dem ringförmigen Einsatz (2) der Garnitur (G) aufgenommen ist, einen länglichen Körper (10) aufweist, der den Ansatz bezüglich der Achse (XX) der Garnitur schräg durchquert und einen stumpfen Verschiebe- oder Ablenkwinkel (a, a1) oder Knickwinkel bezüglich des Kopfes (9) bildet, und ein Ende in Form eines Schnabels (11) aufweist, der aus der Garnitur (G) zur Achse (XX) von dieser vorspringt.

4. Dichtungsanordnung nach einem der Ansprüche 1 bis 3, dadurch gekennzeichnet, daß das Ende oder der Kopf (9) eines jeden Einsatzes (7), der in dem ringförmigen Ansatz (2) der Garnitur (G) eingesetzt ist, vollständig durch das elastische Material der Garnitur (G) überdeckt ist.

5. Dichtungsanordnung nach einem der Ansprüche 1 bis 4, dadurch gekennzeichnet, daß die Garnitur aus einem Verbundwerkstoff (G) in Verlängerung ihres ringförmigen Ansatzes (2) radial und entgegengesetzt zum Ansatz (2) eine schräge ringförmige Lippe (5) aufweist, die zur Achse (XX) der Garnitur wenigstens bis zum minimalen inneren Durchmesser des massiven Körpers (1) der Garnitur (G) konvergiert, wobei die Lippe (5) mit dem massiven Körper (1) eine ringförmige innere Kerbe (4) ausbildet, in deren Innerem ein jeder Einsatz (7) durch seinen Schnabel (11) und einen Bereich seines Körpers (10) vorspringt oder vorsteht.

6. Dichtungsanordnung nach Anspruch 5, dadurch gekennzeichnet, daß die schräge ringförmige Lippe (5) und jeder Einsatz (7) schrittweise dieselbe Neigung bezüglich der Achse (XX) der Garnitur aufweisen.

7. Dichtungsanordnung nach Anspruch 5, dadurch gekennzeichnet, daß die ringförmige innere Kerbe (4) eine schräge Flanke aufweist, in der Nähe des massiven Körpers (1) und eine schräge Flanke aufweist, die durch die geneigte Lippe (5) gebildet wird, wobei ein ringförmiger Raum (12) zwischen einem jeden Einsatz (7) und der geneigten Flanke in der Nähe des massiven Körpers (1) ausgebildet ist, während ein weiterer ringförmiger Raum (13) zwischen einem jeden Einsatz (7) und der Flanke ausgebildet ist, die durch die schräge Lippe (5) gebildet wird.
